# EUROPEAN PATENT SPECIFICATION

(11) **EP 1 165 233 B1**
(45) Date of publication and mention of the grant of the patent: **07.12.2005**
(21) Application number: 00909861.7
(22) Date of filing: 18.02.2000
(51) Int. Cl.: B01J 38/02, B01J 21/20, B09B 3/00, C08L 95/00

(54) **METHOD FOR TREATMENT OF A CATALYST MASS**
VERFAHREN ZUR BEHANDLUNG EINER KATALYSATORMASSE
PROCEDE DE TRAITEMENT D'UNE MASSE CATALYTIQUE

(30) Priority: 19.02.1999 SE 9900570
(43) Date of publication of application: 02.01.2002
(73) Proprietor: KMI Kemimäklarna International AB, 246 21 Löddeköpinge (SE)
(72) Inventor: OLSSON, Bozena, S-246 55 Löddeköpinge (SE)
(74) Representative: Gulliksson, Jonas
(86) International application number: PCT/SE2000/000317
(87) International publication number: WO 2000/051734

(56) References cited:
- US-A- 4 908 064
- US-A- 5 096 498
- US-A- 5 611 910
- DATABASE WPI Week 198514, Derwent Publications Ltd., London, GB; AN 1985-081147, XP002948701 & BE 900 626 A 19 March 1985
- DATABASE WPI Week 199740, Derwent Publications Ltd., London, GB; AN 1997-431650, XP002948702 & JP 9 194 737 A (IDEMITSU KOSAN CO LTD) 29 July 1997 & PATENT ABSTRACTS OF JAPAN & JP 09 194 737 A

## Description

### TECHNICAL FIELD

The present invention relates to a method for the treatment and reclamation of a used catalyst mass, which catalyst mass mainly comprises aluminium oxide. The catalyst mass, which is intended to be treated, can have been used for example as a catalyst in the regeneration of process liquids in the manufacture of hydrogen peroxide, as a catalyst in refineries or as a catalyst in some other industrial process. When it has been used for its catalyst purpose, the catalyst mass typically contains inorganic and/or organic solvents and/or other organic compounds.

### PRIOR ART AND PROBLEMS

In various industrial chemical processes, e.g. hydrogen peroxide production, refineries etc, aluminium oxide (Al₂O₃) is utilized as the main component in catalyst masses. During operation, these catalyst masses absorb inorganic and/or organic solvents or other organic compounds, which organic compounds e.g. can consist of anthraquinones, aliphatic hydrocarbons, aromatic hydrocarbons, ketones, aldehydes and acids. After a certain time, when up to 5-25 percent by weight of inorganic and/or organic solvents or other organic compounds (generally termed pollutants below), including moisture, has been absorbed into the catalyst mass, it is used up and can no longer be utilized for its catalyst purpose.

In the present situation, there is no market for used, polluted catalyst masses of this kind. Nor is it possible to regenerate catalyst masses for reuse as a catalyst mass. Instead, the process industries which utilize catalyst masses containing aluminium oxide pay large sums of money to get rid of used, polluted catalyst masses. They are an environmental pollutant and it is difficult to obtain permission to dump them, since the leachate brings the pollutants out with it. Special measures are therefore required, which cause very high dumping costs.

In BE 900 626, a process is presented which is aimed at calcination of a used catalyst mass of aluminium oxide, a calcination temperature of 700 - 900 °C being used and calcination taking place following fine grinding of the catalyst mass to 90 - 900 microns. The calcination product is then used as an additive in ceramic and refractory products. According to our knowledge, however, the process according to BE 900 626 has never been commercialized, which is probably due to the fact that the calcination product has too much alkalinity to be able to be utilized in practice in ceramic and refractory products, because the used catalyst mass normally contains Na₂O.
The calcination product in BE 900 626 is also very finely ground and thus difficult to handle, with dust problems etc. and impossible to use as it is for certain applications according to the present invention. One reason for the catalyst mass in BE 900 626 being ground to such fine grain sizes is in order to be able to expel moisture and volatile organic compounds at 700-900°C. However, at such low temperatures it is hard to obtain complete splitting of organic solvents into carbon dioxide and water, which can be a very great drawback from the environmental point of view, with air pollutants as a result.

### ACCOUNT OF THE INVENTION

The present method relates to treatment of a used, polluted catalyst mass, which catalyst mass mainly comprises aluminium oxide. Due to treatment, a product is obtained which can be utilized in many different spheres.

The method according to the invention is defined in claim 1.

The used catalyst mass is treated according to the invention by calcination at, combustion at, or heating to 300 - 2200 °C, following which it is used as an additive or main component in any of the products: slag-forming agents in metal or welding wire manufacture, covering agents in metal production, floor coverings, sand-blasting sand, polishing agents, abradants, cleaning agents or synthetic gems.

According to an aspect of the invention, the calcination / heating temperature shall be 300 - 1200 °C, preferably 400 - 1100 °C and even more preferredly 500 - 1000 °C. According to another aspect of the invention, the calcination temperature should be somewhat higher, to produce almost complete evaporation of inorganic and/or organic solvents and/or other organic compounds and splitting of organic solvents/compounds into carbon dioxide and water, also when the grain size of the catalyst mass is retained during calcination. A calcination temperature of at least 800 °C is best used here, preferably at least 910°C, even more preferredly at least 950 °C and most preferredly at least 1000 °C. The upper limit here is 2200 °C, preferably 2000 °C and even more preferredly 1800 °C. A further advantage of high calcination temperatures is that the alkalinity of the catalyst mass can be reduced to a certain extent.

For certain applications, especially when the product of the treatment is to be used in polishing agents, abradants or cleaning materials, it can be advantageous using even higher calcination temperatures, preferably 1800 - 2200 °C, or more preferredly 1900 - 2100 °C. For other applications, on the other hand, the temperature range 1200 - 1800 °C can be utilized.

The catalyst mass can either be inserted into a furnace, preferably an elongated, slightly inclined, rotating furnace with supplementary firing by electricity, oil, natural gas, biogas or similar, which furnace maintains the desired temperature, or can be introduced into a cold furnace and heated up at the same time as the furnace. The dwell time at the desired temperature should be 0.5 - 24 hours, preferably 1 - 12 hours and even more preferredly 2 - 6 hours.

On calcination / heating, the pollutants and water are evaporated from the catalyst mass. The used catalyst mass, which can be of varying porosity, typically contains 1 - 25 percent by weight, preferably 1 - 15 percent by weight and even more preferredly 1.5 - 10 percent by weight of pollutants of the type described above. Due to calcination, this content is reduced to less than 1 percent by weight, preferably less than 0.7 percent by weight and even more preferredly under 0.4 percent by weight. The air supply during calcination should be sufficient for the organic pollutants to be converted to carbon dioxide and water. On calcination, the catalyst mass diminishes by around 15-30 % in weight, the weight reduction consisting of said evaporated pollutants and water. The colour of the catalyst mass, when it consists mainly of aluminium oxide, also changes from e.g. pink or brown to white, at least when treated at the higher temperatures. It is also true here that high temperatures and/or longer dwell times produce the greatest evaporation of pollutants, it being possible to select the process conditions on the basis of economic aspects and/or the desired degree of purity of the product.

However, it is also conceivable to calcine a used catalyst mass according to the invention, which catalyst mass is almost free of organic solvents / compounds. This can be the case, for example, with a catalyst mass from oil refineries, which has been treated to recover its content of organic compounds, but which nevertheless is used and cannot thus be reused in the oil refinery. In certain cases, it can even be conceivable that such a regenerated catalyst mass can be used according to the invention without calcination or with only calcination at relatively low temperatures.

According to an aspect of the invention, the catalyst mass comprises 50 - 100 %, preferably 70 - 100 % and even more preferredly 80 - 100 % aluminium oxide, calculated without the content of pollutants and water. The remaining portion can consist mainly e.g. of other metal oxides or metals, such as Na₂O for example. The polluted catalyst mass can possibly be crushed before calcination, preferably coarsely crushed, but it can also advantageously be calcined with the grain size retained.

According to another aspect of the invention, the catalyst mass is crushed and/or ground and/or sieved following calcination. Crushing can be carried out here to particle sizes of around 0.6 - 6 mm and grinding to various fractions in the range from 0.001 - 0.5 mm. The treated catalyst mass can also be granulated or pelleted, following the possible addition of binding agents, to sizes in the range from 0.5 - 8 mm, preferably 1 - 6 mm and even more preferredly 1 - 4 mm.

The product obtained following calcination and any crushing/grinding/sieving/granulation/pelleting can be used in a number of different areas, the chemical process industry using the catalyst thus being able to sell the product and thereby receive an income from the used catalyst mass, instead of an expense.

Typical areas in which the product can be utilized are reported below:

Metal industry: as a slag-forming agent or as an additive in slag-forming agents when producing steel or iron, or as a slag-forming agent or part of a slag-forming agent in welding wires, e.g. flux core wires or coated welding electrodes. Here the product, mainly containing aluminium oxide, is typically mixed with e.g. CaO, MgO, MnO, FeO, TiO₂ and/or other metals, trace substances or oxides of metals. Often, however, Al₂O₃ is the main component in the slag-forming agent. The product can also be used in the metal industry mixed with MgO as a covering agent to prevent the oxidation of molten metal. In these application areas, the product can be utilized as it is (typical grain size 0.1 - 8 mm) or following fine grinding and granulation.

The product, mainly containing aluminium oxide, can be mixed with the above-named metals, trace substances or oxides of metals in the calcination furnace, which achieves effective mixing when it rotates. Alternatively, mixing can take place only after calcination has been completed.

The invention has very great potential in particular in the metal industry, where very large amounts of slag-forming agents and covering agents are required, especially in that a large part of metal production today is based on the reclamation of scrap. There are thus very great economic and environmental advantages to be achieved when waste from an industry can, according to the invention, be utilized as a substitute for expensive raw materials in another industry.

Rubber and plastics industry: Preferably in finely ground state (0.001 - 0.09 mm) for e.g. blasting or as an additive in floor coverings.

Polishing agents: Following calcination at preferably a high temperature, e.g. 1800 - 2200 °C, as an additive or main component, preferably in a finely ground state (0.001 - 0.09 mm) in polishing agents, abradants or cleaning agents for industrial use. The product can hereby be used e.g. in a dry state as a polishing, abrading or cleaning agent, if applicable on so-called grinding discs, but can also be used in various polishing pastes, it being mixed with e.g. wax or paraffin.

Synthetic gems: Following smelting in an electric furnace at high temperature, around 3530 °C, the aluminium oxide in the product can be recrystallized to form artificial gemstones for industrial or aesthetic use.

### EXAMPLE 1

Tables 1 and 2 record a laboratory experiment carried out with a used catalyst mass containing pollutants, Table 1 showing a grading analysis, i.e. grain size distribution, for a weighed-in sample of 5 kg of used catalyst mass. This catalyst mass has, in the experiment, been calcined in uncrushed form at 1000 °C for 4 hours. The result is shown in the form of a product balance in Table 2, from which it is evident that only 0.2 % of the sample evaporated as hydrocarbon in the waste gases (gas analysis), while a whole 20.2 % of the sample disappeared as burned product. A product analysis showed furthermore that the sample following calcination contained 98.5 % Al₂O₃, 0.39 % C, 0.061 % Fe₂O₃ and 0.53 % Na₂O. The remaining carbon content and alkalinity was clearly acceptable for the intended application areas. The result from the laboratory experiment has also been verified on a full scale, these full-scale experiments pointing to a very satisfactorily functioning process which produced good results, with good economy.

**Table 1 -**

| grading analysis for sample of 5 kg | | | |
|---|---|---|---|
| **Nominal mesh size in** | | | |
| **µm** | **Mesh (ASTM)** | **%** | **Acc. % fine** |
| 1700 | 12 | 10.7 | 89.3 |
| 1180 | 16 | 43.4 | 45.9 |
| 850 | 20 | 25.4 | 20.5 |
| 600 | 30 | 15.7 | 4.8 |
| 425 | 40 | 3.0 | 1.8 |
| 300 | 50 | 0.8 | 1.1 |
| 212 | 70 | 0.4 | 0.7 |
| 150 | 100 | 0.2 | 0.5 |
| <150 | | 0.5 | |
| Loss | | | |
| Total | | 100.0 | |

**Table 2 -**

| Product balance for 5 kg of raw material | | |
|---|---|---|
| **Products** | **Quantity** | |
| | **kg** | **%** |
| Powder | 0.16 | 3.1 |
| Hydrocarbons in exhaust gas | 0.01 | 0.2 |
| Calcined product | 3.82 | 76.5 |
| Total of weighed products | 3.99 | 79.8 |
| Burned product | 1.01 | 20.2 |
| Total | 5.00 | 100.0 |

### EXAMPLE 2

The calcined catalyst mass was mixed in uncrushed form with other components according to Table 3, to form a slag-forming agent which functioned excellently in connection with steel production.

**Table 3 -**

| Slag-forming agent | |
|---|---|
| **Component** | **Content (percent by weight)** |
| Calcined catalyst mass | 66.50 |
| CaO | 20.00 |
| MgO | 10.30 |
| V₂O₅ | 2.00 |
| FeO | 0.45 |
| Cr₂O₃ | 0.40 |
| K₂O | 0.15 |
| SiO₂ | 0.10 |
| MnO | 0.05 |
| TiO₂ | 0.05 |

In connection with the development of the invention, it has furthermore proved to be the case that a used catalyst mass can be used with a possible remaining content of inorganic and/or organic solvents and/or other organic and/or inorganic compounds, e.g. sulphur, i.e. without it being calcined, as a filler material for asphalt mixtures. That this is possible is due to the fact that asphalt in itself contains large amounts of organic compounds, e.g. hydrocarbons, which is why further admixing of organic compounds does not affect asphalt negatively.

The catalyst mass preferably comprises aluminium oxide, and can in addition contain other metal oxides, silicon oxide, ceramic material, zeolites etc. More specifically, the catalyst mass should contain aluminium oxide, Al₂O₃, and possibly one or more other materials selected from the group consisting of ceramic materials (normally ceramic balls), zeolites, SiO₂ MgO, CoO, MoO₃, Fe₂O₃, Na₂O K₂O₉, or other metal oxides.

The catalyst mass comprises mainly aluminium oxide, i.e. 50 - 100 %, preferably 70 - 100 % and even more preferredly 80 - 100 %, calculated without the content of pollutants and water.

This embodiment of the invention also offers very great economic and environmental advantages, which are amplified by the fact that asphalt is used all over the world. Asphalt contains a binding agent, bitumen, which is a brown-black, bituminous mixture of high-molecular hydrocarbons, both polar and non-polar. The bitumen also contains oxygen atoms, nitrogen and significant amounts of sulphur. Bitumen can be formed in nature in the form of natural asphalt, but is usually manufactured by refining petroleum. An asphalt mixture also contains stone material (fraction > 0.075 mm) in the form of natural stone or crushed stone material, and filler (fraction < 0.075 mm) and any other additives, such as polymers, fibres, rubber, pigment and amines.

It is certainly already known to use aluminium oxide in asphalt masses, only newly produced aluminium oxide being used, however, thus signifying an economic disadvantage for the asphalt product. The aim of using aluminium oxide in this regard has been to increase the elasticity and strength of the asphalt.

Said used catalyst mass can be used in a comminuted state as filler material in said asphalt mixture. The catalyst mass is best comminuted by grinding, a fraction formed thereby of which over 80 % consists of material with a grain size of less than 0.075 mm being used as said filler material. Any reject material following grinding and following fractionation can be returned for renewed grinding.

The filler material has the function of giving the asphalt mass strength and stability. Asphalt surfacing without filler lacks stability and has very poor resistance owing to the fact that the bitumen ages and is embrittled rapidly. The filler fills the voids in the stone framework and reduces these to the desired level, as well as stiffening the bitumen and thereby contributing to the stability of the asphalt mixture. Powder is conventionally used as a filler material, which powder is separated in a cleaning system for asphalt manufacture. For many applications, e.g. for so-called framework masses, however, powder filler produced in-house is not sufficient without having to make it up with bought filler, which is naturally an economic disadvantage for the asphalt product. Limestone filler is the most commonly bought filler and is normally metered in quantities of between 2 and 10 percent by weight. However, at present it costs in the order of SEK 400 per tonne, which is to be compared with a cost in the order of 100 Swedish crowns per tonne for converting the catalyst mass into filler material according to the present invention. At the same time, according to the present invention, marketing of a residual product is achieved, the disposal of which product normally has to be paid for. Savings of several thousand crowns per tonne can hereby be made. All in all, this means that the economic gains with the invention are very large, at the same time as dumping of the used catalyst masses can be avoided. In addition, it is greatly advantageous for the quality of the asphalt produced that aluminium oxide is a very hard material.

Finely ground, used catalyst mass which has a grain size distribution in which 100 % passes through a 0.25 mm sieve, over 90 % passes through a 0.125 mm sieve and over 80 % passes through a 0.075 mm sieve is utilized as said filler material.

The used catalyst mass can be utilized as aggregate in the asphalt mixture, with the grain size which it has following its use as a catalyst, i.e. uncrushed, without any actual comminution/grinding. The grain size here can typically be 0.1-8 mm, preferably 0.1-6 mm, depending on the type of catalyst. If applicable the uncrushed catalyst mass can be fractionated/sieved, especially if it has an uneven grain size distribution, for utilization of the desired fraction.

Any grinding is on the whole the only treatment to which the used catalyst mass is exposed before it is added to the asphalt mixture. If the catalyst mass is not ground, then it is in the main not treated at all before it is added to the asphalt mixture. The catalyst mass is therefore used in this case in the asphalt mixture with the content of any organic solvents and/or organic or inorganic compounds, typically hydrocarbons, left in the catalyst mass retained in principle. The fact that this is possible is knowledge on which this embodiment of the invention is based. Used catalyst masses of aluminium oxide cannot, according to earlier reasoning, be reclaimed for reuse as a catalyst mass. For other application areas, furthermore, the content of organic solvents and compounds must be removed, by calcining as above. When utilization in asphalt masses is involved, this is not however necessary, since the asphalt in itself contains significant quantities of hydrocarbons. The additional organic compounds introduced via the catalyst mass do not therefore affect the asphalt produced negatively. It has also been shown that the pollutants in the catalyst mass are effectively bound in the asphalt, there being no risk of leakage and discharge.

It is especially interesting to utilize used catalyst masses from e.g. hydrogen peroxide manufacture, in which case the pollutants can be hydrocarbons, e.g. aliphatic substances, polar and non-polar aliphatic hydrocarbons. Catalyst masses which can be utilized in connection with the invention can also derive e.g. from plastics manufacture, gas plants or power plants, in which case the pollutants may be e.g. hydrocarbons or inorganic compounds, such as sulphur dioxides etc. The invention also relates to the use of used catalyst masses from other processes, e.g. catalyst masses which are polluted by vegetable oils. This means that catalyst masses which do not actually contain any residues of organic or inorganic solvents or compounds can also be used according to the invention. Catalyst masses of this kind may derive for example from oil refining, in which the solvents/compounds have been recovered from the catalyst mass, but where the catalyst mass is nevertheless to be regarded as used for its catalyst purposes, i.e. it is inactive. In refineries, such catalyst masses can be used e.g. in recirculation gas dryers for hydrogen gas , in sulphur reactors, as a drying mass or in propane dryers.

Said used catalyst mass may comprise a maximum of 15 percent by weight, preferably a maximum of 10 percent by weight and even more preferredly a maximum of 7 percent by weight of organic solvents and/or organic compounds, typically hydrocarbons, remaining in the catalyst mass. Normally it contains at least 1 percent by weight of organic solvents and/or organic compounds, typically hydrocarbons, remaining in the catalyst mass, at least when such solvents/compounds have not been recovered from the catalyst mass.

Said catalyst mass can be utilized in a quantity of up to 12 percent by weight, preferably at least 0.5 percent by weight, even more preferredly at least 1 percent by weight and a maximum of 10 percent by weight, as filler material in said asphalt mixture. The catalyst mass can also, when it has been ground into filler, be mixed with another or several other filler materials, preferably selected from the group consisting of powder fillers from asphalt manufacture, limestone filler, hydrated lime, cement, fly ash and ash from waste combustion, in the asphalt mixture. When the catalyst mass is used uncrushed, as an aggregate in the asphalt mass, the maximum content can be higher, typically up to 40 percent by weight, preferably up to 35 percent by weight.

The catalyst mass can be utilized according to the invention in asphalt mixtures for ground surfacing, e.g. road surfacing, or other similar constructions. It can thereby be used in one or more layers of asphalt surfacing, e.g. only in the top wearing course and/or in underlying courses. Normally it is used in surfacing masses of the hot type, manufactured at a temperature of over 120 °C. The catalyst mass can also, in filler form, be used in asphalt mixtures for other applications, such as for roof felt surfacing with asphalt etc., in asphalt paints or in binding agents which contain asphalt material. Another application area is asphalt surfaces for e.g. tennis, the content of Fe₂O₃ in the catalyst mass being able to contribute to the desired colour.

### EXAMPLE 3

The dry components of an asphalt mass which constituted a surfacing mass, i.e. an asphalt mass for an upper wearing course in road surfacing, were mixed with a filler material which consisted of used, polluted catalyst mass comprising aluminium oxide in the main, which was ground down to filler size, i.e. so that at least 80 % passed through a 0.075 mm sieve. In the mixture, the filler part thereby constituted 9.3 percent by weight. This dry mixture was mixed with binding agent (bitumen) in a quantity of 5.5 percent by weight.

The resulting asphalt mass exhibited good properties, the following being measured:

| | |
|---|---|
| Skr. dens. Marsh. | 2.278 g/cm³ |
| Compact density | 2.414 g/cm³ |
| Void content Marsh | 5.6 percent by volume |

The invention is not restricted to the above embodiments, but can be varied in the scope of the claims.

## Claims

1. A method for treating a used aluminium oxide containing catalyst mass comprising the steps of;
a) providing a used aluminium oxide containing catalyst mass having a retained grain size;
b) treating the aluminium oxide containing catalyst mass by calcining at a temperature of at least 1000°C, the upper limit being 2200°C and
c) obtaining a calcinated aluminium oxide containing catalyst mass.

2. The method according to claim 1, wherein the treatment step b) takes place at a temperature having an upper limit of 2000°C.

3. The method according to claim 1, wherein the treatment step b) takes place at a temperature having an upper limit of 1800°C.

4. The method according to claim 1, wherein the treatment step b) takes place at a temperature of 1200-1800 °C.

5. The method according to any of preceding claims, wherein said treatment step b) is carried out during 0,5-24 hours.

6. The method according to any of preceding claims, wherein said treatment step b) is carried out during 1-12 hours.

7. The method according to any of the preceding claims, wherein said aluminium oxide containing catalyst mass further comprises inorganic and/or organic solvents and/or organic compounds, whereby said inorganic and/or organic solvents and/or organic compounds is reduced in total to less than 1% by the treatment step b).

8. The method according to claim 4, wherein said organic compounds are selected from the group consisting of anthraquinones, aliphatic hydrocarbons, aromatic hydrocarbons, ketones, aldehydes and acids.

9. The method according to any of the preceding claims, further comprising:
crushing said aluminium oxide containing catalyst mass after step c) to a particle size of around 0,6-6 mm; and/or
grounding said aluminium oxide containing catalyst mass to a size within the range of 0,001-0,5 mm; and/or
sieving said aluminium oxide containing catalyst mass

10. The method according to any of the preceding claims, further comprising
granulating or pelleting said aluminium oxide containing catalyst mass after step c).

## Patentansprüche

1. Ein Verfahren zur Behandlung einer gebrauchten Aluminiumoxid enthaltenden Katalysatormasse, das folgende Schritte umfasst:
a) Bereitstellen einer gebrauchten Aluminiumoxid enthaltenden Katalysatormasse mit einer unveränderten Komgröße,
b) Behandeln der gebrauchten Aluminiumoxid enthaltenden Katalysatormasse durch Kalzinierung bei einer Temperatur von mindestens 1000°C, wobei die obere Grenze bei 2200°C liegt und
c) Erhalten einer kalzinierten Aluminiumoxid enthaltenden Katalysatormasse.

2. Das Verfahren nach Anspruch 1, wobei der Behandlungsschritt b) bei einer Temperatur mit einer oberen Grenze von 2000°C stattfindet.

3. Das Verfahren nach Anspruch 1, wobei der Behandlungsschritt b) bei einer Temperatur mit einer oberen Grenze von 1800°C stattfindet.

4. Das Verfahren nach Anspruch 1, wobei der Behandlungsschritt b) bei einer Temperatur von 1200- 1800°C stattfindet.

5. Das Verfahren nach einem der vorhergehenden Ansprüche, wobei der Behandlungsschritt b) in einem Zeitraum von 0,5-24 Stunden durchgeführt wird.

6. Das Verfahren nach einem der vorhergehenden Ansprüche, wobei der Behandlungsschritt b) in einem Zeitraum von 1-12 Stunden durchgeführt wird.

7. Das Verfahren nach einem der vorhergehenden Ansprüche, wobei die Aluminiumoxid enthaltende Katalysatormasse außerdem anorganische und/oder organische Lösungsmittel und/oder organische Verbindungen enthält, wobei die anorganischen und/oder organischen Lösungsmittel und/oder organischen Verbindungen durch den Behandlungsschritt b) auf insgesamt weniger als 1% reduziezt werden.

8. Das Verfahren nach Anspruch 4, wobei die organischen Verbindungen aus einer Gruppe bestehend aus Antrachinonen, aliphatischen Kohlenwasserstoffen, aromatischen Kohlenwasserstoffen, Ketonen, Aldeyden und Säuren ausgewählt werden.

9. Das Verfahren nach einem der vorhergehenden Ansprüche, das weiterhin folgendes umfasst:
Zerkleinern der Aluminiumoxid enthaltenden Katalysatormasse nach Schritt c) auf eine Partikelgröße von etwa 0,6-6 mm; und/oder
Mahlen der Aluminiumoxid enthaltenden Katalysatormasse auf eine Größe im Bereich von 0,001-0,5 mm; und/oder
Sieben der Aluminiumoxid enthaltenden Katalysatormasse.

10. Das Verfahren nach einem der vorhergehenden Ansprüche, das weiterhin folgendes umfasst:
Granulieren oder Pelletieren der Aluminiumoxid enthaltenden Katalysatormasse nach Schritt c).

## Revendications

1. Procédé pour traiter une masse de catalyseur usée contenant de l'oxyde d'aluminium comprenant les étapes consistant à ;
a) fournir une masse de catalyseur usée contenant de l'oxyde d'aluminium ayant une dimension de grain retenue ;
b) traiter la masse de catalyseur contenant de l'oxyde d'aluminium par une calcination à une température d'au moins 1000°C, la limite supérieure étant de 2200°C et
c) obtenir une masse de catalyseur calcinée contenant de l'oxyde d'aluminium.

2. Procédé selon la revendication 1, dans lequel l'étape de traitement b) a lieu à une température ayant une limite supérieure de 2000°C.

3. Procédé selon la revendication 1, dans lequel l'étape de traitement b) a lieu à une température ayant une limite supérieure de 1800°C.

4. Procédé selon la revendication 1, dans lequel l'étape de traitement b) a lieu à une température comprise entre 1200 et 1800°C.

5. Procédé selon l'une quelconque des revendications précédentes, dans lequel ladite étape de traitement b) est réalisée pendant de 0,5 à 24 heures.

6. Procédé selon l'une quelconque des revendications précédentes, dans lequel ladite étape de traitement b) est réalisée pendant de 1 à 12 heures.

7. Procédé selon l'une quelconque des revendications précédentes, dans lequel ladite masse de catalyseur contenant de l'oxyde d'aluminium comprend en outre des solvants inorganiques et/ou organiques et/ou des composés organiques, moyennant quoi lesdits solvants inorganiques et/ou organiques et/ou composés organiques sont réduits au total à moins de 1 % par l'étape de traitement b).

8. Procédé selon la revendication 4, dans lequel lesdits composés organiques sont choisis dans le groupe constitué par des anthraquinones, des composés hydrocarbonés aliphatiques, des composés hydrocarbonés aromatiques, des cétones, des aldéhydes et des acides.

9. Procédé selon l'une quelconque des revendications précédentes, comprenant en outre l'étape consistant à :
écraser ladite masse de catalyseur contenant de l'oxyde d'aluminium après l'étape c) afin de donner une dimension de particules d'environ 0,6 à 6 mm ; et/ou
broyer ladite masse de catalyseur contenant de l'oxyde d'aluminium afin de donner une dimension dans la gamme de 0,001 à 0,5 mm ; et/ou
tamiser ladite masse de catalyseur contenant de l'oxyde d'aluminium.

10. Procédé selon l'une quelconque des revendications précédentes, comprenant en outre l'étape consistant à :
transformer en granules ou transformer en pastilles ladite masse de catalyseur contenant de l'oxyde d'aluminium après l'étape c).
